**Europäisches Patentamt**

**European Patent Office**

**Office européen des brevets**

(19)

(11) Veröffentlichungsnummer : **0 203 452 B2**

(12) **NEUE EUROPÄISCHE PATENTSCHRIFT**

(45) Veröffentlichungstag der neuen Patentschrift :
**29.09.93 Patentblatt 93/39**

(51) Int. Cl.⁵ : **B23B 3/30**

(21) Anmeldenummer : **86106528.2**

(22) Anmeldetag : **14.05.86**

(54) Numerisch gesteuerte Drehmaschine.

(30) Priorität : **24.05.85 DE 3518792**

(43) Veröffentlichungstag der Anmeldung :
**03.12.86 Patentblatt 86/49**

(45) Bekanntmachung des Hinweises auf die
Patenterteilung :
**17.11.88 Patentblatt 88/46**

(45) Bekanntmachung des Hinweises auf die
Entscheidung über den Einspruch :
**29.09.93 Patentblatt 93/39**

(84) Benannte Vertragsstaaten :
**AT BE CH DE FR GB IT LI NL SE**

(56) Entgegenhaltungen :
**DE-A- 2 520 500**
**DE-A- 3 148 078**
**DE-A- 3 320 940**
**DE-C- 2 259 372**

(56) Entgegenhaltungen :
**GB-A- 2 159 750**
**US-A- 4 457 193**
**Firmenprospekt (Fa. Boley) Zweispindeldrehmaschine BKN 100-DE**

(73) Patentinhaber : **Traub AG
Ulmer Strasse 49-55
D-73262 Reichenbach (DE)**

(72) Erfinder : **Kersten, Günther
Mozartstrasse 4
D-7311 Hochdorf (DE)**
Erfinder : **Klauss, Walter
Frühlingstrasse 39
D-7327 Adelberg (DE)**
Erfinder : **Michl, Jürgen
Hofackerweg 26
D-7311 Notzingen (DE)**

(74) Vertreter : **Wuesthoff, Franz, Dr.-Ing. et al
Wuesthoff & Wuesthoff Patent- und
Rechtsanwälte Schweigerstrasse 2
D-81541 München (DE)**

EP 0 203 452 B2

EP 0 203 452 B2

## Beschreibung

Die Erfindung betrifft eine numerisch gesteuerte Drehmaschine mit den Merkmalen des Oberbegriffs des Patentanspruches 1.

Eine solche Drehmaschine ist aus der DE-A-33 20 940 bekannt (vgl. auch Zweispindeldrehmaschine der Firma BOLEY vom Typ BKN100-E).

Bei der DE-A-33 20 940 sind zwei einzeln angetriebene Arbeitsspindeln jeweils in einem eigenen Spindelstock diagonal gegenüberliegend gelagert, wobei jeder Spindel ein eigener Werkzeugträger zugeordnet ist. Diese Anordung ermöglicht insbesondere bei Stangenarbeiten eine Bearbeitung der Werkstücke von beiden Seiten bei kurzen Nebenzeiten.

Es sind auch sogenannte Doppelschlittenmaschinen bekannt, bei denen zwei Kreuzschlitten mit jeweils einem Werkzeugträger vorgesehen sind, so daß ein Werkstück gleichzeitig mit zwei Werkzeugen bearbeitet werden kann.

Der Erfindung liegt die Aufgabe zugrunde, die Betriebskonfigurationen der eingangs genannten numerisch gesteuerten Drehmaschine wirtschaftlich zu erweitern.

Die erfindungsgemäße Lösung dieser Aufgabe ist im Patentanspruch 1 gekennzeichnet.

Vorteilhafte Ausgestaltungen der Erfindung sind in den Unteransprüchen der Erfindung beschrieben.

Mit der Erfindung wird erreicht, daß sowohl mit beschränkten Steuermitteln ein "Doppelschlittenbetrieb" gegenüber der Hauptspindel als auch eine vollwertige Fortsetzung der Verarbeitung des Werkstückes in der Hauptspindel beim "Doppelspindelbetrieb" nach Wechsel des Werkstückes in der Gegenspindel ermöglicht ist.

Bei der Betriebsart "Doppelschlittenbetrieb" sind die Steuersysteme erfindungsgemäß so eingesetzt, daß die Hauptspindel mittels des ersten Steuersystems bezüglich ihrer Drehzahl steuerbar, ihrer Lage regelbar und ihres Winkels mit zumindest einem der Werkzeugträger synchronisierbar ist, wobei die X-Achse und die Z-Achse eines Werkzeugträgers mittels der X- bzw. Z-Achsensteuerung des einen Steuersystems steuerbar sind, während die X-Achse und die Z-Achse des anderen Werkzeugträgers des Doppelschlittenbetriebes mittels der X- bzw. Z-Achsensteuerung des anderen Steuersystems steuerbar sind. Wird die Drehmaschine im Verlaufe der Bearbeitung eines Werkstückes auf die Betriebsart « Doppelspindelbetrieb » umgestellt, so ist die Gegenspindel mittels des ersten Steuersystems bezüglich ihrer Drehzahl steuerbar, ihrer Lage regelbar und ihres Winkels mit dem weiteren Werkzeugträger synchronisierbar, wobei die Hauptspindel mittels eines der Steuersysteme zumindest hinsichtlich ihrer Drehzahl regelbar ist und die X- und die Z-Achsen des im Doppelspindelbetrieb der Hauptspindel zugeordneten zweiten Werkzeugträgers mittels des anderen Steuersystems steuerbar ist.

Die erfindungsgemässe Steuerung ermöglicht, dass in der Betriebsart « Doppelschlittenbetrieb » die beiden der Hauptspindel gegenüberliegenden Kreuzschlitten mit ihren Werkzeugträgern in Funktions- und Synchronisationszusammenhang mit der Hauptspindel stehen können. Während der Bearbeitung eines Werkstückes kann die Steuerung so umgeschaltet werden, dass einer der Kreuzschlitten im Funktions- und Synchronisationszusammenhang mit der Hauptspindel steht, während der andere Kreuzschlitten im Funktions- und Synchronisationszusammenhang mit der Gegenspindel steht, so dass zwei getrennte Bearbeitungssysteme gebildet werden (Doppelspindelbetrieb).

Mit der erfindungsgemässen Drehmaschine können somit unterschiedliche Werkstückpartien gleichzeitig mit gleichartigen Operationen bearbeitet werden und die angetriebenen Werkzeuge sind durch numerische Befehle drehzahlregelbar. Insbesondere können die angetriebenen Werkzeuge der Werkzeugträger durch numerische Steuerbefehle zur Hauptspindel winkelsynchron im ganzzahligen und im Dezimalbruch-Verhältnis geregelt werden.

Während der Bearbeitung eines Werkstückes kann die Winkelsynchronisation zwischen der Hauptspindel und einem der angetriebenen Werkzeuge aufgehoben werden. Stattdessen können zur angetriebenen Werkstückaufnahme in der Gegenspindel die angetriebenen Werkzeuge des zweiten und des weiteren Werkzeugträgers winkelsynchron im ganzzahligen oder im Dezimalbruch-Verhältnis geregelt werden. Im Doppelspindelbetrieb kann sowohl die Hauptspindel als auch die Gegenspindel mit dem zugeordneten Werkzeug synchronisiert werden.

Nachfolgend ist die Erfindung anhand der Zeichnung näher beschrieben. Es zeigt:

Fig. 1 eine schematische Darstellung einer erfindungsgemässen Drehmaschine und

Fig. 2 ein Prinzip-Schaltbild einer Steuerung für die in Fig. 1 gezeigte Drehmaschine.

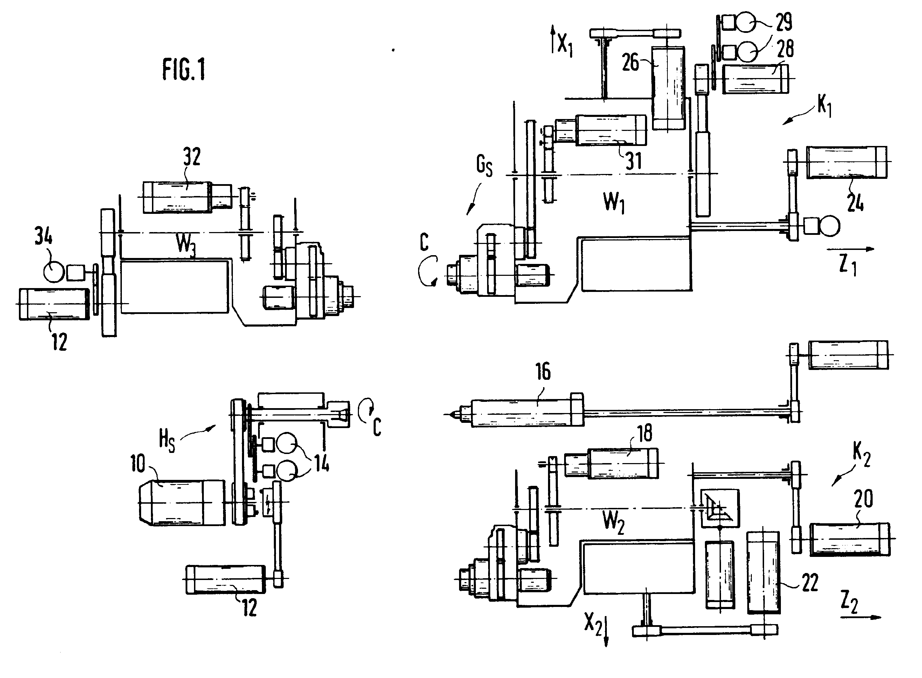

Fig. 1 zeigt eine Hauptspindel $H_s$, die von einem Motor 10 beaufschlagt wird. Ein Servomotor 12 dient der Lageverstellung der Hauptspindel. Messgeber 14 ermitteln die Lage bzw. den Winkel der Hauptspindel $H_s$. Die sogenannte « C »-Achse ist mit ihrem Drehsinn eingezeichnet.

Der Hauptspindel gegenüber liegt neben einem Reitstock 16 ein zweiter Kreuzschlitten $K_2$ mit üblichen Längs- und Querschlitten, die entsprechend den Koordinaten $X_2$ und $Z_2$ bewegbar sind. Ein Revolver-Schal-

2

EP 0 203 452 B2

tantrieb 18 beaufschlagt den Werkzeugträger $W_2$, der zum Kreuzschlitten $K_2$ gehört. Die Antriebe bezüglich der Z-Achse und der X-Achse sind mit den Bezugzeichen 20 und 22 versehen.

Diagonal der Hauptspindel $H_s$ gegenüber liegt ein weiterer Kreuzschlitten $K_1$ mit einem Werkzeugträger $W_1$ und einer Gegenspindel $G_s$. Die C-Achse der Gegenspindel $G_s$ ist ebenfalls eingezeichnet. Der Kreuzschlitten $K_1$ weist ebenfalls Antriebe 24, 26 bezüglich der Z- bzw. X-Achse auf. Ein Servomotor 28 und zubeordnete Messgeber 29 wirken mit dem Werkzeugträger $W_1$ zusammen, welcher ebenfalls einen Revolver-Schaltantrieb 31 aufweist.

Die Gegenspindel $G_s$ ist hinsichtlich ihrer Drehzahl steuerbar, ihrer Lage in der Z-Achse regelbar und auch winkelsynchron mit dem zugeordneten Werkzeugträger $W_3$ (im Doppelspindelbetrieb) regelbar.

Der Gegenspindel $G_s$ gegenüber liegt auf der Hauptspindelseite der weitere Werkzeugträger $W_3$, der ebenfalls mit einem Servomotor 12 versehen ist sowie mit einem Revolver-Schaltantrieb 32 und einem Messgeber 34. Der Werkzeugträger $W_3$ ist drehzahlsteuerbar und winkelsynchon regelbar.

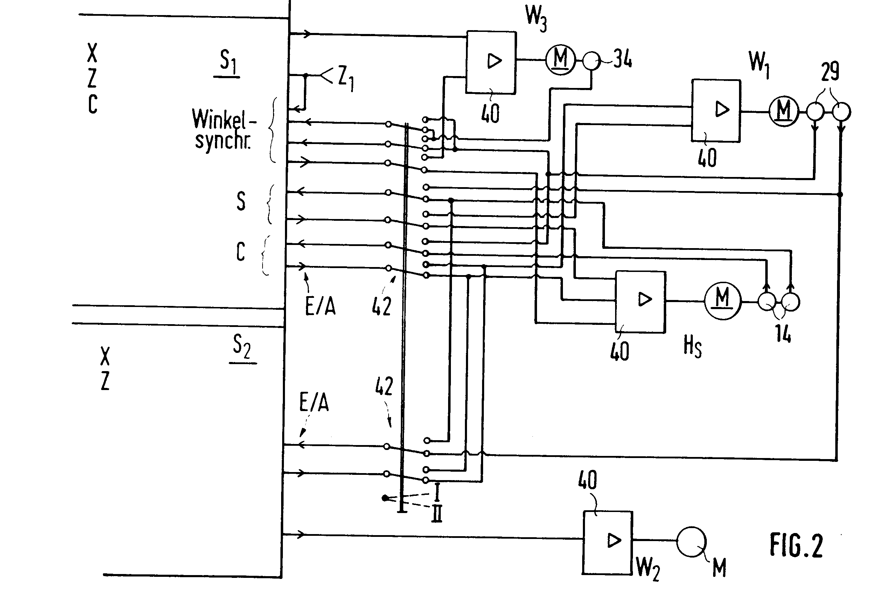

Fig. 2 zeigt schematisch die beiden Steuersysteme $S_1$ und $S_2$ zur Steuerung der in Fig. 1 gezeigten Drehmaschine. Das erste Steuersystem $S_1$ weist eine X- und eine Z-Achsensteuerung auf sowie eine sogenannte C-Achsensteuerung einschliesslich einer Lageregelung. Bei dem zweiten Steuersystem $S_2$ ist die C-Achsensteuerung ausgespart.

Entsprechend den Pfeilen E/A werden Signale in die beiden Steuersysteme $S_1$ bzw. $S_2$ eingelesen bzw. ausgelesen.

Die gesteuerten Elemente, nämlich die Hauptspindel $H_s$, die Werkzeugträger $W_1$ (wahlweise mit der Gegenspindel), $W_2$ und $W_3$ weisen jeweils lokale Schaltungen 40 auf, die von den beiden Steuersystemen $S_1$ und $S_2$ über Schalter 42 angesteuert werden. Die Schalter 42 sind gekoppelt und in zwei Stellungen bewegbar, in der in Fig. 2 gezeigten unteren Stellung II wird die Drehmaschine im Doppelschlittenbetrieb gesteuert, während sie in der gestrichelt gezeichneten Stellung I im Doppelspindelbetrieb gesteuert wird. Die durch den Messgeber 14, 29, 34 ermittelten Werte werden in die Steuerungen eingegeben.

Im gezeigten Doppelschlittenbetrieb wird die Hauptspindel $H_s$ hinsichtlich ihrer Drehzahl gesteuert, ihrer Lage geregelt (C-Achse) und mit dem Werkzeugträger $W_1$ winkelsynchronisiert. Auch der Werkzeugträger $W_1$ wird mit seinem angetriebenen Werkzeug drehzahlgesteuert. Die X- und Z-Achsen $X_1$ und $Z_1$ des Werkzeugträgers $W_1$ werden durch das erste Steuersystem $S_1$ gesteuert, während die entsprechenden Achsen $X_2$ und $Z_2$ des Werkzeugträgers $W_2$ durch das zweite Steuersystem $S_2$ gesteuert werden. Beide Werkzeugträger $W_1$, $W_2$ sind antreibbar.

Im Doppelspindelbetrieb steuert das Steuersystem $S_1$ die im Kreuzschlitten $K_1$ untergebrachte Gegenspindel $G_s$ und das Steuersystem $S_2$ steuert die Hauptspindel $H_s$. Es lassen sich zwei Werkstücke gleichzeitig bearbeiten. Hierzu sind die Achsen $X_1$ und $Z_1$ des ersten Kreuzschlittens $K_1$ mittels des ersten Steuersystems $S_1$ und die Achsen $X_2$, $Z_2$ des zweiten Werkzeugträgers $W_2$ mittels des zweiten Steuersystems $S_2$ steuerbar. Die Steuerung der Achse $X_1$ erfolgt bei hoher Drehfrequenz mit niedriger Auflösung, während die Achse $X_2$ bei mittlerer Drehfrequenz eine hohe Auflösung aufweist.

Die einzelnen Betriebsarten und Funktionen sind in Tabelle I zusammengefasst:

TABELLE I

| Betriebsart Umschalt. d. G-Fkt | (2 × 2) Doppelschlittenbetrieb | | (2 × 2) Doppelspindelbetrieb | |
|---|---|---|---|---|
| System | $S_1$ | $S_2$ | $S_1$ | $S_2$ |
| Spindel | Hauptspindel | Hauptspindel | Gegenspindel | Hauptspindel |
| Umdr. Vorschub | $X_1 / Z_1$ | $X_2 / Z_2$ | $X_1 / Z_1$ | $X_2 / Z_2$ |
| Gewindestrehlen | Hauptspindel | Hauptspindel | Gegenspindel | Hauptspindel |
| V-konst. | Hauptspindel | Hauptspindel | Gegenspindel | Hauptspindel |
| C-Achse | Hauptspindel | — | Gegenspindel | — |
| Angetriebene Werkzeuge | $W_1 / W_2$ | $W_1 / W_2$ | $W_3$ | $W_2$, sehr beschränkt |
| Winkel-Synchronisation | Hauptspindel-$W_1$ | — | Gegenspindel-$W_3$ | — |

Mit einer derart ausgelegten und gesteuerten Drehmaschine können ausser Drehbearbeitungen auch Bohr- und Fräsbearbeitungen durchgeführt werden. Mit Hilfe der Lageregelung der C-Achse der Hauptspindel $H_s$ können drei-dimensionale Fräsoperationen ausgeführt werden, wenn die X-, Z- und C- Achsen in Funkti-

3

onszusammenhang stehen.

Mit der Gegenspindel $G_s$ kann eine bereits bearbeitete Vorderseite eines Werkstückes aufgenommen werden und zur rückseitigen Bearbeitung einem Werkzeugträger $W_3$, der ebenfalls antreibbar ist, zugeführt werden.

Die Vielfalt der Bearbeitungsmöglichkeiten bezüglich der Vorderseite des Werkstückes lässt sich auch auf die Bearbeitung der Rückseite übertragen, wenn der Doppelschlittenbetrieb aufgehoben und in einen Doppelspindelbetrieb umgewandelt wird. Im Doppelspindelbetrieb steht das erste Steuersystem $S_1$ mit seiner C-Achsensteuerung einschliesslich der Lageregelung mit der Gegenspindel $G_s$ und den Achsen $X_1$, $Z_1$ des zugehörigen Kreuzschlittens $K_1$ in Funktionszusammenhang, während das Steuersystem $S_2$ die Achsen $X_2$, $Z_2$ und die Hauptspindel beaufschlagt.

Im Doppelspindelbetrieb kann beispielsweise in der Hauptspindel $H_s$ mit dem Steuersystem $S_2$ an einem ersten Werkstück A ein Gewinde gedreht werden, wobei gleichzeitig in der Gegenspindel $G_s$ an einem Werkstück B oder an der Rückseite des bereits teilweise bearbeiteten Werkstückes A' ein Gewinde gedreht werden kann.

Auch kann beispielsweise an einem Werkstück A auf der Vorderseite mit Hilfe der C-Achse eine umfangreiche, drei-dimensionale Fräsoperation durchgeführt werden und nach der Umschaltung der Steuerung kann auch die Rückseite des Werkstückes ebenfalls einer drei-dimensionalen Fräsoperation unterzogen werden, obwohl die Steuerung nur eine einzige C-Achsenfunktion aufweist.

Da alle Antriebe Servoeigenschaften besitzen und mit Messgebern für die Drehzahl und die Lageposition ausgestattet sind, kann das angetriebene Werkzeug jeweils winkelsynchron in ganzzahligem oder Dezimalbruch-Verhältnis geregelt werden. Hierbei wird bevorzugt der dynamisch schlechtere Antrieb zur Führungsgrössenbildung herangezogen und der dynamisch bessere Antrieb wird durch numerische Steuerbefehle vorgegeben.

Dient als angetriebenes Werkzeug ein Abwälzfräser, so lässt sich an einem Werkstück auf der Frontseite eine Verzahnung im Abwälzfräsverfahren herstellen. Wird danach die Steuerung auf Doppelspindelbetrieb umgeschaltet, so tritt an die Stelle der Hauptspindel die Gegenspindel und das angetriebene Werkzeug im Werkzeugträger $W_3$ wird in gleicher Weise wie zuvor in Abhängigkeit zur Gegenspindel geregelt. Somit lässt sich auch auf der Rückseite des Werkstückes eine Verzahnung anbringen, obwohl die Winkelsynchron-Regeleinrichtung nur einmal vorhanden ist.

## Patentansprüche

1. Numerisch gesteuerte Drehmaschine mit einer Hauptspindel der zumindest zwei Kreuzschlitten ($K_1$, $K_2$) gegenüberliegen, von denen der erste ($K_1$) mit einer angetriebenen Gegenspindel ($G_S$) versehen ist und der zweite ($K_2$) einen Werkzeugträger ($W_s$) aufweist, mit einem weiteren Werkzeugträger ($W_3$) auf der Hauptspindelseite, und mit Steuersystemen ($S_1$, $S_2$), die eine X-Achsensteuerung und eine Z-Achsensteuerung je Kreuzschlitten sowie mindestens eine C-Achsensteuerung mit Lageregelung aufweisen, wobei die Werkzeuge der Werkzeugträger antreibbar sind, sowohl die Haupt- als auch die Gegenspindel zur Aufnahme eines Werkstückes geeignet sind, beide Spindeln einer Drehzahlsteuerung unterliegen und mindestens eine Spindel zusätzlich bezüglich ihrer Lage regelbar und ihres Winkels mit einem Werkzeugträger synchronisierbar ist, so daß Werkstücke sowohl in der Haupt- als auch in der Gegenspindel je anhand eines relativ dazu verfahrbaren Werkzeugträgers gleichzeitig bearbeitbar sind, dadurch **gekennzeichnet**, daß

   - auch der erste Kreuzschlitten ($K_1$) einen für antreibbare Werkzeuge geeigneten Werkzeugträger ($W_1$) aufweist,
   - neben einem ersten Steuersystem ($S_1$) umfassend eine X-Achsensteuerung, eine Z-Achsensteuerung und eine C-Achsensteuerung mit Lageregelgung ein zweites Steuersystem ($S_2$) gegeben ist, welches eine X-Achsensteuerung und eine Z-Achsensteuerung, aber keine C-Achsensteuerung aufweist, wobei die X- und Z-Achsensteuerungen des ersten bzw. des zweiten Steuersystems ($S_1$, $S_2$) jeweils dem ersten Kreuzschlitten ($K_1$) bzw. dem zweiten Kreuzschlitten ($K_2$) fest zugeordnet sind, während die C-Achsensteuerung des ersten Steuersystems ($S_1$) durch Umschaltung wahlweise an der Hauptspindel ($H_S$) bzw. an der Gegenspindel ($G_S$) zwecks deren jeweiliger Lageregelung und Winkelsynchronisierung anschaltbar ist, derart, daß
   - beim Anschalten der C-Achsensteuerung an der Hauptspindel ($H_S$) diese mit dem ersten Kreuzschlitten ($K_1$) bezüglich ihrer Lage regelbar und ihres Winkels synchronisierbar ist, wobei ein Werkstück in der Hauptspindel ($H_S$) zugleich von Werkzeugen in dem jeweiligen Werkzeugträger ($W_1$, $W_2$) des ersten ($K_1$) bzw. des zweiten ($K_2$) Kreuzschlittens bearbeitbar ist, und daß beim Anschalten der C-Achsensteuerung an der Gegenspindel ($G_S$) eine gleichzeitige unabhängige Bearbeitung von zwei Werkstücken, je in der Hauptspindel ($H_S$) anhand des Werkzeugträgers ($W_2$) am zweiten Kreuzschlitten ($K_2$) und in der Gegenspindel ($G_S$) bei entsprechender Lageregelung und Winkelsynchronisierung mit dem ersten Kreuzschlitten ($K_1$) anhand des weiteren Werkzeugträgers ($W_3$) durchführbar ist.

2. Drehmaschine nach Anspruch 1,
dadurch **gekennzeichnet,** daß die Werkzeuge der Werkzeugträger ($W_1$, $W_2$, $W_3$) drehzahlgeregelt antreibbar sind.

## Claims

1. A numerically controlled lathe, comprising a main spindle ($H_S$) opposite of which there are at least two cross slides ($K_1$, $K_2$) of which the first one ($K_1$) is provided with a driven tail spindle ($G_S$) and the second one ($K_2$) includes a saddle ($W_2$), further comprising another saddle ($W_3$) at the main spindle end, and control systems ($S_1$, $S_2$) including X-axis control and Z-axis control per cross slide as well as at least C-axis control with positional adjustment, the tools of the saddles being adapted to be driven, both the main and tail spindles being adapted to receive a workpiece, both spindles being subjected to rotational speed control and at least one spindle additionally being adjustable as to position and angularly synchronizable with a saddle so that workpieces can be processed simultaneously in the main spindle as well as the tail spindle, each by means of a saddle which is movable relative to the same, **characerized** in that
   - also the first cross slide ($K_1$) comprises a saddle ($W_1$) suitable for tools which are adapted to be driven,
   - next to a first control system ($S_1$) comprising X-axis control, Z-axis control, and C-axis control with positional adjustment, a second control system ($S_2$) is provided which comprises X-axis control and Z-axis control but no C-axis control, the X- and Z-axes controls of the first and second control systems ($S_1$, $S_2$) being firmly associated with the first cross slide ($K_1$) and the second cross slide ($K_2$), respectively, while the C-axis control of the first control system ($S_1$) is selectively connectable, by switchover, either to the main spindle ($H_S$) or to the tail spindle ($G_S$) for their respective positional adjustment and angular synchronization such that
   - upon connection of the C-axis control to the main spindle ($H_S$), the latter is adjustable in position and angularly synchronizable with the first cross slide ($K_1$), a workpiece in the main spindle ($H_S$) being adapted to be processed simultaneously by tools in the respective saddle ($W_1$, $W_2$) of the first ($K_1$) or second ($K_2$) of the cross slides, and upon connection of the C-axis control to the tail spindle ($G_S$), simultaneous independent processing of two workpieces is possible, once in the main spindle ($H_S$) by means of the saddle ($W_2$) at the second cross slide ($K_2$) and also in the tail spindle ($G_S$) with corresponding positional adjustment and angular synchronization with the first cross slide ($K_1$) by means of the further saddle ($W_3$).

2. The lathe as claimed in claim 1, characterized in that the tools of the saddles ($W_1$, $W_2$, $W_3$) are adapted to be driven under rotational speed control.

## Revendications

1. Tour à commande numérique comportant une broche principale ($H_S$), en vis-à-vis de laquelle sont disposés au moins deux chariots à mouvements croisés ($K_1$, $K_2$), parmi lesquels le premier ($K_1$) comporte une broche opposée ($G_s$) entraînée et le second ($K_2$) possède un porte-outil ($W_s$), un autre porte-outil ($W_3$) situé du côté de la broche principale, et des systèmes de commande ($S_1$, $S_2$), qui possèdent un dispositif de commande suivant l'axe X et un dispositif de commande suivant l'axe Z, pour chacun des chariots à mouvements croisés, ainsi qu'au moins un dispositif de commande suivant l'axe C, une régulation de position, et dans lequel les outils des porte-outils peuvent être entraînés, aussi bien la broche principale que la broche opposée conviennent pour la réception d'une pièce à usiner, la vitesse de rotation des deux broches est commandée et en outre la position d'au moins une broche peut être réglée et son angle peut être synchronisé avec au moins un porte-outil, de sorte que les pièces à usiner peuvent être traitées simultanément aussi bien sur la broche principale que sur la broche opposée, respectivement en fonction d'un porte-outil déplaçable par rapport à la broche, caractérisé en ce que
   - le premier ($K_1$) des chariots à mouvements croisés possède également un porte-outil ($W_1$) convenant pour des outils devant être entraînés,

- en dehors d'un premier système de commande ($S_1$) incluant un dispositif de commande suivant l'axe X, un dispositif de commande suivant l'axe Z et un dispositif de commande suivant l'axe C, avec une régulation de position, il est prévu un second système de commande ($S_2$), qui comprend un dispositif de commande suivant l'axe X et un dispositif de commande suivant l'axe Z, mais pas de dispositif de commande suivant l'axe C, les dispositifs de commande suivant les axes X et Z des premier et second systèmes de commande ($S_1$, $S_2$) étant associés de façon fixe respectivement au premier chariot ($K_1$) et au second chariot ($K_2$) des chariots à mouvements croisés, tandis que le dispositif de commande suivant l'axe C du premier système de commande ($S_1$) peut être raccordé par commutation au choix à la broche principale ($H_S$) ou à la broche opposée ($G_S$) en vue de la régulation de la position et de la synchronisation de l'angle de la broche respective, de telle sorte que
- lors du raccordement du dispositif de commande suivant l'axe C à la broche principale (Hs), la position de cette broche est réglable et son angle peut être synchronisé avec le premier ($K_1$) des chariots à mouvements croisés, une pièce à usiner montée sur la broche principale ($H_S$) pouvant être traitée simultanément par des outils situés dans le porte-outil respectif ($W_1$, $W_2$) du premier ($K_1$) ou du second ($K_2$) des chariots à mouvements croisés, et que lors du raccordement du dispositif de commande suivant l'axe C à la broche opposée ($G_S$), un traitement indépendant simultané peut être appliqué à deux pièces à usiner, respectivement sur la broche principale (Hs) en référence au porte-outil ($W_2$) situé sur le second ($K_2$) des chariots à mouvements croisés, et sur la broche opposée ($G_S$) dans le cas d'une régulation correspondante de position et d'une synchronisation correspondante de l'angle avec le premier ($K_1$) des chariots à mouvements croisés, sur la base de l'autre porte-outil ($W_3$).

2. Tour selon la revendication 1, caractérisé en ce que les outils des porte-outils ($W_1$, $W_2$, $W_3$) peuvent être entraînés avec un réglage de leurs vitesses de rotation.

FIG.1

$X_1$

26

29

28

$K_1$

31

$G_S$

$W_1$

24

C

$Z_1$

32

$W_3$

34

12

16

$H_S$

C

10

14

18

$K_2$

12

$W_2$

20

22

$X_2$

$Z_2$

EP 0 203 452 B2

FIG.2